**Europäisches Patentamt**

**European Patent Office**

**Office européen des brevets**

(11) Numéro de publication: **0 165 088**
**B1**

(12) **FASCICULE DE BREVET EUROPEEN**

(45) Date de publication du fascicule du brevet: **31.08.88**

(51) Int. Cl.⁴: **F 16 D 55/224**

(21) Numéro de dépôt: **85400765.5**

(22) Date de dépôt: **17.04.85**

(54) **Frein à disque à étrier coulissant.**

(30) Priorité: **26.04.84 FR 8406585**

(43) Date de publication de la demande:
**18.12.85 Bulletin 85/51**

(45) Mention de la délivrance du brevet:
**31.08.88 Bulletin 88/35**

(84) Etats contractants désignés:
**DE GB IT NL SE**

(56) Documents cités:
**EP-A-0 076 729**
**EP-A-0 080 950**
**GB-A-1 066 842**
**GB-A-1 562 911**
**GB-A-2 004 008**

(73) Titulaire: **BENDIX France**
**126, rue de Stalingrad**
**F-93700 Drancy (FR)**

(72) Inventeur: **Carre, Jean-Jacques**
**59 Boulevard de l'Est**
**F-93340 Le Raincy (FR)**
Inventeur: **Thioux, Alain**
**9, Allée des Bordes**
**F-94430 Chennevieres (FR)**
Inventeur: **Mery, Jean-Claude**
**61, rue Emile Zola**
**F-93320 Pavillons-sous-Bois (FR)**

(74) Mandataire: **Timoney, Ian Charles Craig et al**
**Division Technique Service Brevets Bendix**
**Europe 126, rue de Stalingrad**
**F-93700 Drancy (FR)**

Courier Press, Leamington Spa, England.

## Description

La présente invention a pour objet un frein à disque comportant un étrier coulissant sur un support fixe au moyen d'au moins une colonnette axiale.

La EP—A—0 080 950 représente et décrit un frein à disque comportant un étrier monté coulissant sur un support fixe au travers d'une colonnette axiale unique. Ce frein comporte deux éléments de friction décalés tangentiellement de part et d'autre d'un plan radial passant par l'axe du moteur de frein permettant ainsi de corriger l'usure différentielle sur les éléments de friction internes et externes. Un décalage judicieux des éléments de friction permet lors d'un freinage en marche avant du véhicule de ne faire supporter à la colonnette axiale qu'un effort tangentiel correspondant à la trainée engendrée par l'élément de friction externe, la réaction à la rotation de l'étrier dans le plan tangent lorsque celui-ci est sollicité par l'élément de friction externe et supporté par le disque de freinage. Si cette structure donne satisfaction dans la plupart des cas, il a été néanmoins constaté que lors de freinages à haute vitesse et d'intensité faible à moyenne, les défauts géométriques du disque sont susceptibles d'engendrer une pulsation du couple de freinage perceptible au niveau du confort de conduite. Les défauts géométriques du disque sont soit ceux inhérants à la fabrication de celui-ci, soit dans le cadre des disques ventilés les défauts géométriques pouvant apparaître du fait des dilatations différentes au droit des ailettes de refroidissement. Ces pulsations de couple, et plus particulièrement celles engendrées par l'élément de friction externe sont alors transmises par l'intermédiaire de l'étrier à la colonnette et donc au support fixe, ce qui engendre une vibration au niveau du train avant du véhicule et se répercute sur le volant, si le frein en question est monté sur l'essieu avant du véhicule.

L'invention a pour but de proposer un frein à disque présentant tous les avantages des patins décalés et dans lequel pour une plage prédéterminée du couple de freinage, les pulsations de couple ne sont pas transmises au support fixe. Dans ce but, l'invention propose un frein à disque du type comportant un étrier coulissant sur un support fixe au moyen d'au moins une colonnette axiale s'étendant parallèlement à l'axe du disque, un moteur de frein agissant directement sur un élément de friction interne et, par réaction au travers de l'étrier sur un élément de friction externe, lesdits éléments de friction étant décales tangiellement de part et d'autre d'un plan radial passant par l'axe du moteur de frein, l'élément de friction interne étant ancré sur le support fixe, l'élément externe étant ancré sur l'étrier, ledit décalage tangentiel des éléments de friction étant tel que lors d'un freinage en marche avant l'étrier est soumis à un effort tangentiel engendré par l'élément de friction externe, ledit étrier comportant un dispositif de positionnement dudit étrier par rapport audit support fixe, caractérisé en ce que ledit dispositif de positionnement est progressif et asservi audit effort tangentiel sur une plage prédéterminée dudit effort, ladite colonnette comportant un élément progressivement effaçable sous l'effet dudit effort tangentiel assurant un déplacement circonférentiel de l'étrier par rapport au support fixe, et ledit dispositif de positionnement comportant des moyens de butée limitant ledit déplacement au delà de ladite plage prédéterminée.

On comprend que grâce à une telle structure, le dispositif de positionnement découple l'étrier du support fixe sur la plage du couple pour laquelle apparaissent les pulsations, le dispositif de positionnement étant asservi à l'effort tangentiel engendré par l'élément de friction interne, ce qui permet un déplacement progressif de l'étrier par rapport au support fixe.

Selon une autre caractéristique de l'invention, le dispositif de positionnement incorpore un dispositif d'amortissement limitant les pulsations du couple.

D'autres caractéristiques et avantages du frein à disque objet de la présente invention apparaîtront à la lecture de la description détaillée qui se réfère aux dessins annexés dans lesquels:

—la Fig. 1 est une vue de face d'un frein à disque réalisé conformément aux enseignements de la présente invention;

—la Fig. 2 est une vue de dessus du frein à disque de la Fig. 1 et comportant des portions représentées en coupe;

—la Fig. 3 est une vue en coupe selon la ligne III—III de la Fig. 2;

—la Fig. 4 est une vue partielle agrandie en coupe selon la ligne IV—IV de la Fig. 1;

—la Fig. 5 est une vue similaire à la Fig. 1 pour un deuxième mode de réalisation de l'invention;

—la Fig. 6 est une vue de dessus du frein de la Fig. 5;

—la Fig. 7 est une vue en coupe partielle agrandie selon la ligne VII—VII de la Fig. 5; et

—la Fig. 8 est une vue en coupe partielle agrandie selon la ligne IV—IV d'une variante du frein de la Fig. 5.

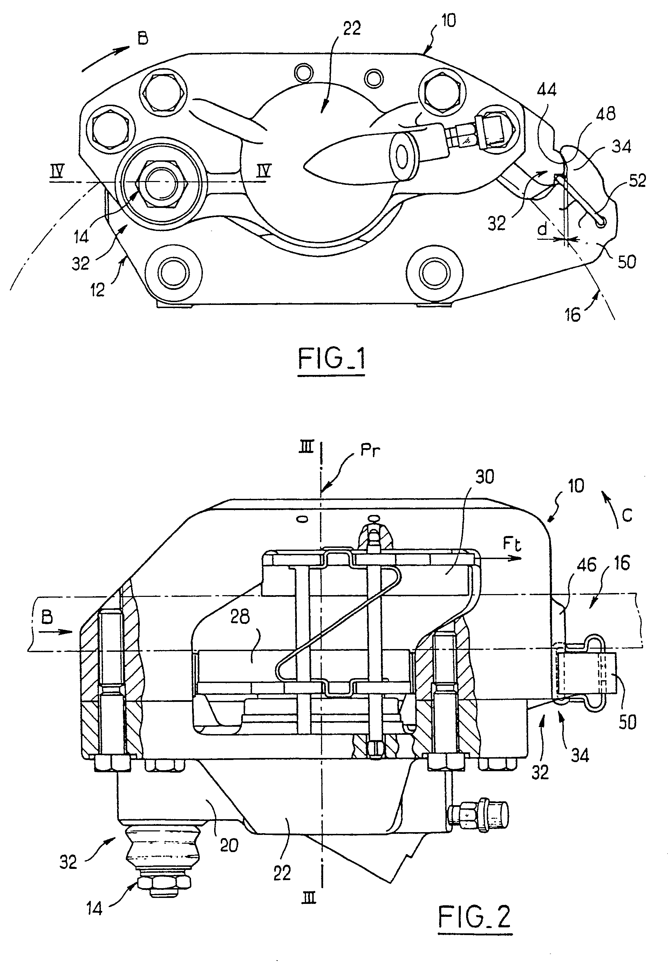

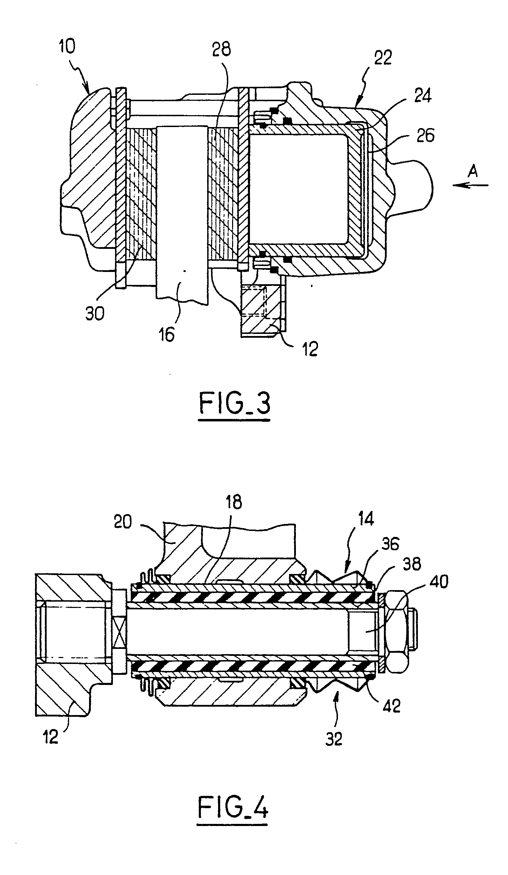

Le frein à disque représenté sur les Fig. 1 à 4 comprend un étrier mobile 10 monté coulissant sur un support fixe 12. L'étrier 10 est monté coulissant sur le support fixe 12 au moyen d'une colonnette axiale 14 s'étendant parallèlement à l'axe de rotation d'un disque tournant 16. Comme le montre plus particulièrement la Fig. 4, la colonnette axiale 14 est fixée au support fixe 12 par une liaison filetée. La colonnette axiale 14 est reçue en coulissement dans un alésage cylindrique 18 formé dans un bras 20 de l'étrier 10. Des capuchons de protection sont prévus entre le bras 20 et les extrémités de la colonnette 14 pour protéger les surfaces de coulissement. D'une façon conventionnelle comme représenté sur la Fig. 3, l'étrier 10 comporte un moteur de frein désigné dans son ensemble par la référence 22, ce moteur de frein comporte un piston 24 susceptible d'être sollicité dans le sens de la flèche A lorsque du fluide sous pression est introduit dans une chambre 26 du moteur de frein à partir d'une source de pression (non représentée). Le piston 24 est susceptible d'agir directement sur un élément de friction interne 28 et par réaction au travers de l'étrier coulissant sur un élément de friction externe 30 pour provoquer un engagement de friction des éléments 28 et 30 sur les faces opposées du disque 16. En désignant par Pr le plan radial passant par le centre du moteur de frein 22 et par la flèche B le sens de rotation du disque 16 lorsque le véhicule est en marche avant, on voit que le centre de l'élément de friction externe 30 est décalé vers la droite par rapport au plan radial et que le centre de l'élément de friction interne 28 est décalé vers la gauche du plan Pr toujours en se référant à la Fig. 2. On comprend que l'engagement de friction des deux éléments de friction 28 et 30 avec le disque tournant crée un couple dans le sens de la flèche C de la Fig. 2 corrigeant ainsi l'usure différentielle pour chacun des éléments de friction, et pour un décalage judicieusement choisi, permet de ne faire supporter à la colonnette 14 que l'effort tangentiel Ft engendré par l'élément de friction externe 30. Ce phénomène de correction est largement expliqué dans le demande de brevet européen précitée et ne sera pas développé d'avantage présentement.

Conformément à l'invention, le frein représenté sur les Fig. 1 à 4 comporte un dispositif de positionnement désigné dans son ensemble par la référence 32. Dans ce mode de réalisation, le dispositif de positionnement 32 est formé d'une part par la colonnette 14, et d'autre part par des moyens de butée 34 comme on le verra dans la description qui va suivre. En se reportant à la Fig. 4, on voit que la colonnette 14 est formée par un tube extérieur 36 sur lequel est susceptible de coulisser l'étrier 10 au moyen de l'alésage 18 formé dans le bras 20, d'un deuxième tube intérieur 38 fixé sur le support fixe 12 au moyen d'un système fileté désigné dans son ensemble par la référence 40 et enfin, un manchon élastique 42 monté entre les deux tubes 36 et 38 et solidaire de ceux-ci. Le manchon élastique 42 formant comme on le verra plus tard un élément progressivement effaçable et formant également un dispositif d'amortissement. En se reportant aux Fig. 1 et 2, on voit que le dispositif de positionnement 32 comporte des moyens de butée 34 formés par une surface convexe 44 formée sur une barrette 46 de l'étrier 10 et coopérant avec une surface concave 48 formée sur un bras 50 du support fixe 12. Comme on le voit plus particulièrement sur la Fig. 1, les deux surfaces convexes et concaves sont séparées circonférentiellement d'une distance d. On notera que le rayon de courbure de la surface convexe 44 est inférieur au rayon de courbure de la surface concave 48. Un ressort 52 solidaire du bras 50 du support fixe 12 sollicite radialement vers l'extérieur la barrette 46 et donc l'étrier 10 et maintient élastiquement les surfaces convexes 44 et concaves 48 en contact. On notera que la distance d'au repos des surfaces 44 et 48 est nettement inférieure à l'épaisseur du manchon élastique 42.

Le frein qui vient d'être décrit à l'aide des Fig. 1 à 4 fonctionne de la manière suivante:

Au repos, les différents éléments occupent les positions représentées sur les Figures. Lorsque du fluide sous pression est admis dans la chambre 26 du moteur de frein 22, le piston 24 est sollicité dans le sens de la flèche A de la Fig. 3 et applique l'élément de friction interne 28 sur une première face du disque 16. Par réaction, l'étrier 10 coulisse sur la colonnette 14 et plus précisément, l'alésage 18 du bras 20 coulisse sur la surface extérieure du tube 36. L'étrier 10 s'étant déplacé dans le sens inverse de la flèche A, l'élément de friction externe 30 est appliqué sur l'autre face du disque 16. L'élément de friction 30 engendre un effort tangentiel Ft du fait de la friction entre cet élément 30 et le disque 16, effort Ft est intégralement transmis au bras 20 de l'étrier 10 du fait du décalage circonférentiel des éléments de friction 28 et 30. Cet effort Ft appliqué au bras 20 sollicite la colonnette 14 dans la même direction et plus précisément, sollicite le manchon élastique 42 au travers du tube extérieur 36. Sous l'effet de cet effort Ft, le manchon 42 par compression du caoutchouc, s'efface progressivement en fonction de l'effort Ft appliqué; pendant cette phase de fonctionnement, la surface convexe 44 progresse le long de la surface concave 48, et la distance d qui sépare ces deux surfaces dans le sens circonférentiel diminue à l'encontre du ressort 52. Lorsque l'effort Ft est tel que le manchon 42 s'est effacé suffisamment pour que la distance d devienne nulle, l'étrier 10 est en butée franche sur le support fixe 12. Pour toute augmentation de l'effort Ft, l'étrier reste en butée sur le support fixe 12 et le déplacement de l'étrier est limité au déplacement prédéterminé d.

Comme on le voit, le choix de la dureté du manchon 42 et du jeu d au niveau des moyens de butée 34 permet de définir avec précision la plage de l'effort tangentiel Ft pour laquelle l'étrier 10 est suspendu élastiquement par rapport au support fixe 12 et ne transmet pas à celui-ci les pulsations de Ft, le manchon élastique 42 jouant également le rôle d'un dispositif d'amortissement de ces pulsations. Par contre, au-delà de la plage pour laquelle ces pulsations peuvent apparaître l'étrier est ancré positivement sur le support fixe pour supporter les efforts tangentiels de valeur élevée. Ainsi le frein comporte un dispositif de positionnement de l'étrier par rapport au support fixe asservi à l'effort tangentiel Ft qui permet un déplacement progressif de l'étrier 10 sur un plage prédéterminée de l'effort Ft, plage au-delà de laquelle l'étrier 10 retrouve une butée franche sur le support fixe 12.

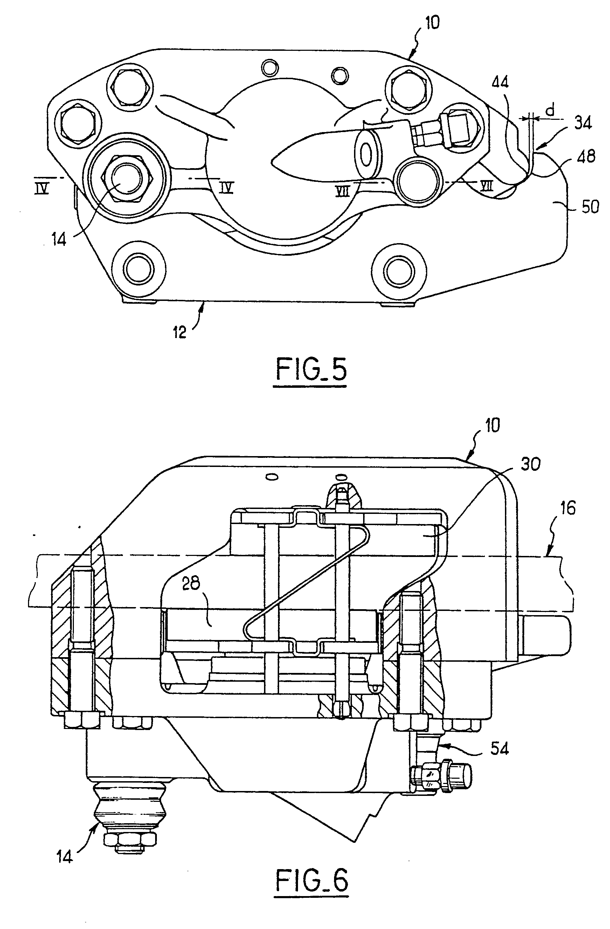

Sur les Figs. 5, 6 et 7 on a représenté un deuxième mode de réalisation de l'invention, où les mêmes éléments portent les mêmes références. Dans ce mode de réalisation, un deuxième colonnette 54 de coulissement est placée entre le support fixe 12 et l'étrier 10. Cette colonnette est formée par un axe 56 solidaire du support fixe 12 et coulissant dans un manchon 58 élastique, solidaire de l'étrier 10, le coulissement se produisant entre l'axe 56 et le manche en caoutchouc 58. Le manchon élastique 58 assure le contact élastique entre les surfaces convexes 44 et concaves 48 formées respectivement sur l'étrier 10 et le support fixe 12 comme dans le premier mode de réalisation, à la différence que dans ce mode de réalisation, le manchon élastique 58 jouant le rôle de l'élément élastique 52 du premier mode de réalisation sollicite radialement vers l'intérieur l'étrier 10 par rapport au support fixe 12.

Le fonctionnement de ce deuxième mode réalisation est identique à celui du premier mode de réalisation et ne sera pas décrit davantage.

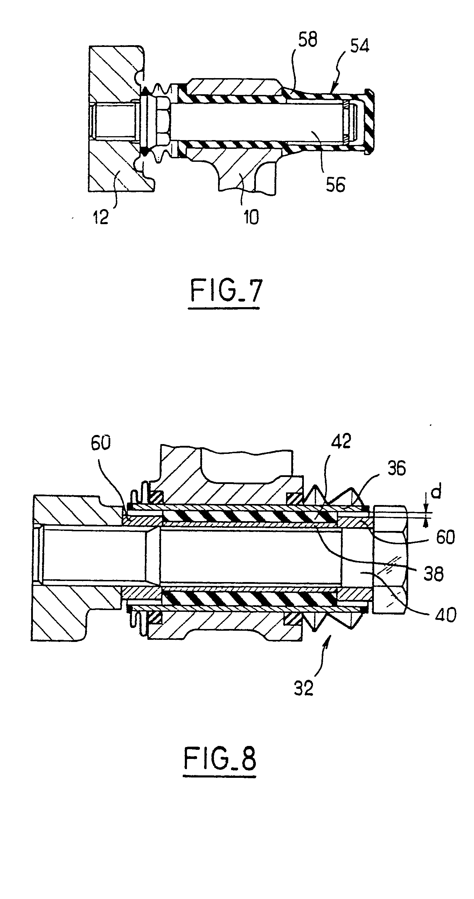

On a représenté sur la Fig. 8 une variante du deuxième mode de réalisation dans laquelle les moyens de butée 34 sont assurés par la colonnette 14. Dans cette variante, le support fixe ne comporte pas le bras 50 et l'étrier 10 est dépourvu de la barrette 46 et de la surface convexe 44. La fonction butée 34 est réalisée au moyen de deux bagues rigides 60 placées aux deux extrémités du manchon élastique 42 de manière à définir entre ces bagues 60 et le tube extérieur 36 un jeu radial d identique ou similaire au jeu circonférentiel qui existait entre les deux surfaces convexes et concaves des deux modes de réalisation précédents. Ces bagues rigides peuvent soit être intercalées entre les deux tubes intérieur 38 et extérieur 36 en laissant le jeu d ou bien être placées à même la vis 40 et limitant l'écrasement du manchon 42 par la venue en butée du tube extérieur 36 sur lesdites bagues rigides 60.

Le fonctionnement est alors identique aux deux modes de réalisation précédents, lorsque l'effort tangentiel Ft atteint la valeur prédéterminée, le dispositif de positionnement 32 empêche tout déplacement supplémentaire de l'étrier par rapport au support fixe au-delà du déplacement maximal d prédéterminé.

Comme dans les deux modes de réalisation précédents, la raideur du caoutchouc du manchon 42 et la distance d entre les bagues 60 et le tube extérieur 36 définissent la plage pour laquelle le dispositif de positionnement est asservi à l'effort tangentiel de l'élément de friction externe 30.

Il est bien entendu que l'invention n'est pas limité aux modes de réalisation qui viennent d'être décrits, en particulier les surfaces de butée peuvent être rectilignes et non convexes et concaves, de même l'agencement de la colonnette 14 peut être modifié sans sortir du cadre de la présente invention.

## Revendications

1. Frein à disque du type comportant un étrier (10) coulissant sur un support fixe (12) au moyen d'au moins une colonnette axiale (14) s'étendant parallèlement à l'axe du disque (16), un moteur de frein (22) agissant directement sur un élément de friction interne (28) et, par réaction au travers de l'étrier (10) sur un élément de friction externe (30), lesdits éléments de friction (28, 30) étant décalés tangiellement de part et d'autre d'un plan radial (Pr) passant par l'axe du moteur de frein (22), l'élément de friction interne (28) étant ancré sur le support fixe (12), l'élément de friction externe (30) étant ancré sur l'étrier (10), ledit décalage tangentiel des éléments de friction (28, 30) étant tel que lors d'un freinage en marche avant (B) l'étrier est soumis à un effort tangentiel (Ft) engendré par l'élément de friction externe (30), ledit étrier (10) comportant un dispositif de positionnement (32) dudit étrier par rapport audit support fixe, caractérisé en ce que ledit dispositif de positionnement (32) est progressif et asservi audit effort tangentiel (Ft) sur une plage prédéterminée dudit effort (Ft), ladite colonnette (14) comportant un élément progressivement effaçable (42) sous l'effet dudit effort tangentiel (Ft) assurant un déplacement circonférentiel de l'étrier (10) par rapport au support fixe (12), et ledit dispositif de positionnement (32) comportant des moyens de butée (34) limitant ledit déplacement au-delà de ladite plage prédéterminée.

2. Frein à disque selon la revendication 1, caractérisé en ce que ledit dispositif de positionnement (32) incorpore un dispositif d'amortissement de vibrations (42) de l'étrier (10).

3. Frein à disque selon la revendication 1, caractérisé en ce que lesdits moyens de butée (34) sont formés par des surfaces convexes (44) maintenues élastiquement en contact avec des surfaces concaves (48), le rayon de courbure des surfaces concaves (48) étant supérieur à celui des surfaces convexes (44) et en ce que au repos les deux dites surfaces (44, 48) sont séparées circonférentiellement d'une distance (d) correspondant à un déplacement maximum prédéterminé.

4. Frein à disque selon la revendication 3, caractérisé en ce que la surface convexe (44) est formée sur l'étrier (10), la surface concave (48) étant formée sur le support fixe (12) et en ce qu'un élément élastique (52, 58) sollicite sensiblement radialement l'étrier (10) maintenant en contact lesdites deux surfaces (44, 48).

5. Frein à disque selon la revendication 1, caractérisé en ce que lesdits moyens de butée (34) sont solidaires de ladite colonnette (14) et limitent l'effacement de l'élément progressivement effaçable (42).

6. Frein à disque selon l'une des revendications 4 ou 5, caractérisé en ce que ladite colonnette (14) est formée d'un manchon élastique (42) placé sans jeu entre deux tubes concentriques (36, 38), le tube intérieur (38) étant fixé au support fixe (12) au moyen d'un système fileté le traversant (40), le tube extérieur (36) passant dans une alésage (18) formé sur l'étrier (10), ledit étrier étant susceptible de coulisser par rapport audit tube extérieur (36).

7. Frein à disque selon les revendications 5 et 6, prises en combinaison, caractérisé en ce que deux bagues rigides (60) sont placées avec un jeu radial (d) aux extrémités des tubes (36, 38) et entre ceux-ci et limitent l'effacement dudit manchon élastique (42) audit jeu radial correspondant au déplacement maximum prédéterminé (d).

8. Frein à disque selon les revendications 5 et 6 prises en combinaison, caractérisé en ce que deux bagues rigides (60) solidaires du tube intérieur (38) sont placées aux extrémités dudit tube intérieur et présentent une distance radiale (d) entre la surface extérieure des bagues et la surface intérieure du tube extérieur (36) correspondant au déplacement maximum prédéterminé.

**Patentansprüche**

1. Scheibenbremse mit einem Bremssattel (10), der auf einem festgelegten Bremsträger (12) mittels mindestens eines axialen Bolzens (14) gleitet, welcher sich parallel zur Achse der Bremsscheibe (16) erstreckt, einem Bremsmotor (22), der unmittelbar auf einen inneren Bremsbacken (28) und durch Reaktion über den Bremssattel (10) auf einen äußeren Bremsbacken (30) einwirkt, wobei die Bremsbacken (28, 30) in tangentialer Richtung beidseitig zu einer durch die Achse des Bremsmotors (22) verlaufenden Radialebene (Pr) versetzt sind, wobei der innere Bremsbacken (28) am Bremsträger (12) und der äußere Bremsbacken (30) am Bremssattel (10) festgelegt ist, wobei dier tangentiale Versatz der Bremsbacken (28, 30) so gewählt ist, daß bei einer Bremsung während der Vorwärtsfahrt (B) der Bremssattel einer Tangentialkraft (Ft) ausgesetzt ist, die von dem äußeren Bremsbacken (30) erzeugt wird, und wobei der Bremssattel (10) eine Positioniervorrichtung (32) zum Positionieren des Bremssattels bezüglich des Bremsträgers aufweist, dadurch gekennzeichnet, daß die Positioniervorrichtung (32) progressiv ausgebildet und durch die Tangentialkraft (Ft) über einen vorgegebenen Bereich dieser Kraft (Ft) steuerbar ist, wobei der Bolzen (14) ein Bauteil (42) aufweist, das unter der Wirkung der Tangentialkraft (Ft) progressiv verkleinerbar ist, wodurch eine Verschiebung des Bremssattels (10) in Umfangsrichtung bezüglich des Bremsträgers (12) hervorgerufen wird, und daß die Positioniervorrichtung (32) Anschlagmittel (34) aufweist, die diese Verschiebung über den besagten vorgegebenen Bereich hinaus begrenzen.

2. Scheibenbremse nach Anspruch 1, dadurch gekennzeichnet, daß die Positioniervorrichtung (32) eine Dämpfungsvorrichtung zum Dämpfen von Schwingungen (42) des Bremssattels (10) enthält.

3. Scheibenbremse nach Anspruch 1, dadurch gekennzeichnet, daß die Anschlagmittel (34) von konvexen Flächen (44) gebildet sind, die mit konkaven Flächen (48) elastisch in Berührung gehalten werden, wobei der Krümmungsradius der konkaven Flächen (48) größer ist als der der konvexen Flächen, und daß in der Ruhestellung die beiden besagten Flächen (44, 48) in Umfangsrichtung un einen Abstand (d) voneinander getrennt sind, der einer vorgegebenen maximalen Verschiebung entspricht.

4. Scheibenbremse nach Anspruch 3, dadurch gekennzeichnet, daß die konvexe Fläche (44) am Bremssattel (10) und die konkave Fläche (48) am Bremsträger (12) gebildet ist, und daß ein elastisches Element (52, 58) den Bremssattel (10) in im wesentlichen radialer Richtung vorspannt, was die beiden Flächen (44, 48) in Anlage hält.

5. Scheibenbremse nach Anspruch 1, dadurch gekennzeichnet, daß die Anschlagmittel (34) einteilig mit dem Bolzen (14) ausgebildet sind und die Verkleinerung des progressiv verkleinerbaren Elementes (42) begrenzen.

6. Scheibenbremse nach Anspruch 4 oder 5, dadurch gekennzeichnet, daß der Bolzen (14) von einer elastischen Hülse (42) gebildet wird, der spielfrei zwischen zwei konzentrischen Rohren (36, 38) angeordnet ist, wobei das innere Rohr (38) am Bremsträger (12) mittels eines durch diesen hindurch verlaufenden Schraubmechanismus (40) festgelegt ist, während sich das äußere Rohr (36) in eine am Bremssattel (10) gebildet Bohrung (18) hineinerstreckt, wobei der Bremssattel bezüglich dieses äußeren Rohres (36) gleitbar ist.

7. Scheibenbremse nach den Ansprüchen 5 und 6, dadurch gekennzeichnet, daß zwei starre Ringe (60) mit einem radialen Spiel (d) auf den Enden der Rohre (36, 38) und zwischen diesen angeordnet sind und die Verkleinerung der elastischen Hülse (42) auf dieses radiale Spiel begrenzen, das der vorgegebenen maximalen Verschiebung (d) entspricht.

8. Scheibenbremse nach den Ansprüche 5 und 6, dadurch gekennzeichnet, daß zwei mit dem inneren Rohr fest verbundene starre Ringe (60) auf den Enden des inneren Rohres angeordnet sind und einen radialen Abstand (d) zwischen der Außenseite der Ringe und der Innenseite des äußeren Rohres (36) aufweisen, der der vorgegebenen maximalen Verschiebung entspricht.

**Claims**

1. Disc brake of the type incorporating a caliper (10) sliding on a stationary support (12) by means of at least one axial pillar (14) lying parallel to the axis of the disc (16), a brake actuator (22) acting directly upon an inner friction component (28) and, by reaction through the caliper (10), upon an outer friction component (30), the said friction components (28, 30) being tangentially offset on each side of a radial plane (Pr) passing through the axis of the brake actuator (22), the inner friction component (28) being anchored on the stationary support (12), the outer friction component (30) being anchored on the caliper (10), the said tangential offset of the friction components (28, 30) being such that during forward braking (B) the caliper is subjected to a tangential force (Ft) generated by the outer friction component (30), the said caliper (10) incorporating a device for positioning (32) the said caliper relative to the said stationary support, characterized in that the said positioning device (32) is progressive and dependent upon the said tangential force (Ft) over a predetermined range of the said force (Ft), the said pillar (14) incorporating a component (42) which can be progressively deformed (42) under the effect of the said tangential force (Ft) ensuring a circumferential movement of the caliper (10) relative to the stationary support (12), and the said positioning device (32) incorporating abutment means (34) which limit the said movement beyond the said predetermined range.

2. Disc brake according to Claim 1, characterised in that the said positioning device (32) incorporates a device for damping vibrations (42) of the caliper (10).

3. Disc brake according to Claim 1, characterized in that the said abutment means (34) are formed by convex surfaces (44) held in contact elastically with concave surfaces (48), the radius of curvature of the concave surfaces (48) being greater than that of said convex surfaces (44) and in that at rest the two said surfaces (44, 48) are separated circumferentially by a distance (d) corresponding to a predetermined maximum movement.

4. Disc brake according to Claim 3, characterized in that the convex surface (44) is formed on the caliper (10), the concave surface (48) being formed on the stationary support (12), and in that an elastic component (52, 58) pushes the caliper (10) substantially radially holding the said two surfaces (44, 48) in contact.

5. Disc brake according to Claim 1, characterized in that the said abutment means (34) are firmly fixed to the said pillar (14) and limit the deformation of the progressively deformable component (42).

6. Disc brake according to one of Claims 4 or 5, characterized in that the said pillar (14) is formed of an elastic sleeve (42) positioned without clearance between two concentric tubes (36, 38), the inner tube (38) being fixed to the stationary support (12) by means of a threaded system passing through it (40), the outer tube (36) passing through a bore (18) formed in the caliper (10), the said caliper being capable of sliding relative to the said outer tube (36).

7. Disc brake according to Claims 5 and 6 taken together, characterized in that two rigid rings (60) are positioned with a radial clearance (d) at the ends of the tubes (36, 38) and between the latter, and limit the deformation of the said elastic sleeve (42) to the said radial clearance corresponding to the predetermined maximum movement (d).

8. Disc brake according to Claims 5 and 6 taken together, characterized in that two rigid rings (60) firmly fixed to the inner tube (38) are positioned at the ends of the said inner tube and leave a radial distance (d) between the outer surface of the rings and the inner surface of the outer tube (36) corresponding to the predetermined maximum movement.

FIG_1

FIG_2

0 165 088

FIG_3

FIG_4

FIG_5

FIG_6

FIG_7

FIG_8